Europäisches Patentamt

(10) European Patent Office

Office européen des brevets

(11) Publication number: **0 173 418**
**B1**

# EUROPEAN PATENT SPECIFICATION

(45) Date of publication of patent specification: **04.04.90**

(51) Int. Cl.⁵: **C 03 B 27/00, A 47 J 36/06**

(21) Application number: **85303909.7**

(22) Date of filing: **03.06.85**

(54) **Method of making a tempered glass lid.**

(30) Priority: **31.08.84 JP 183568/84**

(43) Date of publication of application:
**05.03.86 Bulletin 86/10**

(45) Publication of the grant of the patent:
**04.04.90 Bulletin 90/14**

(84) Designated Contracting States:
**DE FR GB**

(56) References cited:
**FR-A-2 088 021**
**US-A-4 053 295**
**US-A-4 066 430**

(73) Proprietor: **Kawamura Glass Manufacturing Co., Ltd.**
**192, Aza-Shinhikiyama Ouaza-Inokoishihara Idaka-cho**
**Meito-ku Nagoya Aichi-Pref. (JP)**

(72) Inventor: **Kawamura, Takumi**
**196-1, Aza-Nishishin Ouaza Obata**
**Moriyama-ku Nagoya Aichi Pref. (JP)**

(74) Representative: **Godwin, Edgar James et al**
**MARKS & CLERK 57-60 Lincoln's Inn Fields**
**London, WC2A 3LS (GB)**

Courier Press, Leamington Spa, England.

## Description

The present invention relates to a method of making a tempered glass lid suitable for a cooking utensil, according to the preamble of claim 1.

Methods which are specifically intended for making a tempered glass-made lid for use with a cooking utensil are known. One method includes the steps of initially cutting a transparent sheet of glass to a specified size forming a lid, heating it to specific temperatures for forming an inwardly curved surface on one side, and then cooling the whole of the formed sheet by the blast of cool air. Thereafter, a lid is completed by fitting a metallic ring around its outer rim and fastening a knob to its top center. This method is described in the U.S. patent No. 4053295 and corresponding Japanese examined patent No. 57—9806. Another method provides a tempered glass from a cut sheet glass (as disclosed in the Japanese patent application (unexamined) No. 57—41733).

More specifically, the first mentioned method features the steps of heating the cut sheet glass to 600°C—640°C, forming it to an inwardly curved shape following the suction-type pattern under the applied heating, and the rapidly cooling the shape by the blast of cool air. Thus, a tempered glass lid is obtained. This method has several problems. One is the fact that rapid tempering is only made by means of cool air. This makes the uniform tempering by the rapid cooling difficult, since there is the inwardly curved area. Furthermore, the cool air around the center of the curved area tends to be pooled there, staying there longer than the outer peripheral area. This causes a lower strength or toughness in the area where a center hole is provided to which a knob is to be secured and the area of the outer rim around which a metallic ring is firmly to be fitted. Another problem is the use of ambient air as the cooling air. The cooling air requirements must depend on the possible variations in the ambient temperature. Considering the thermal capacity of the supplied cool air, the relevant processing time must be relatively long. Although the Japanese application No. 57—9806 makes mention of supplying a cool air uniformly, it discloses no specific information concerning how the uniform supply is made. For example, it is described that the shaped glass is heated to 600°C—640°C and is then rapidly cooled by the blast of the ambient temperature air (15°C to 20°C). Although it may be said that the ambient air is relatively cool with respect to the heated glass, a uniform cooling can not be achieved even though a constant air supply is made, since it very often depends upon the condition of the jet of air stream to be supplied from the appropriate nozzles.

The other method (as disclosed in the Japanese specification No. 58—41733) blows a stream of atomized water or an air stream containing atomized water on both sides of a flat sheet glass, which is suspended vertically. However, some problems occur when the lid-formed glass is suspended vertically. Then, it must be placed horizontally on its support, and a stream of atomized water must be supplied onto the glass from the above. This causes water drops easily to remain on the surface, which prevents the uniform cooling. Furthermore, partial or local excessive cooling occurs.

When the lid forming glass is suspended vertically, a holder is required. Using the holder leaves its traces on the surface of the glass. This is not desirable in terms of the appearance and quality of the final product. The use of the holder also causes a deformation in the glass.

It is therefore one object of the present invention to offer an improved method of making a tempered glass lid, in order to eliminate the problems of the prior art methods. The object is achieved by intially heating a cut sheet glass to a specific temperature in order to form it to a lid shape having an inwardly curved profile, placing the formed glass horizontally (on a metal net, for example), blowing jets of atomized water produced by compressed air as well as jets of cool air onto its surfaces thereby allowing the glass rapidly to cool within a short time (seconds), and then cooling the result by means of a certain temperature additional cool air. The method proposed by the present invention allows any glass-based curved lid to be cooled uniformly and adequately. All the glass-based lids that have been tempered as above are then passed through differential temperature testing so as to check their thermal resistance. The testing takes place for all lids, during which all the lids are allowed to cool to the ambient temperature. Thus, the time required for this cooling can be saved. This testing also has the advantage of ensuring all products provide high quality.

As details will be presented later in a separate section, the preferred method may be summarized as follows. The initial step is to heat a cut sheet glass forming a lid to a temperature that softens it, followed by the step of forming it under the applied heating so that it can provide a usual lid shape having a central portion formed like a recess or reversed spherical surface. Then, atomized water produced by compressed air as well as cool air is blown onto both sides of the formed glass, allowing it to cool for three to five seconds. After this, an additional cool air of 5°C—10°C is blown for five to ten seconds, allowing the glass to cool. By doing so, the whole surface of the glass is uniformly tempered. Particularly, this two-staged cooling process provides uniformly tempered central and other peripheral areas, including the other area. This completes a tempered glass lid. Following the tempering process, all the glass-based lids are passed through the water showering area, where the differential temperature testing also occurs to check their thermal resistance. Thus, the time required for allowing all lids to cool to the ambient temperature can be saved. Then, a knob is fastened to the center hole by appropriate fastening means, and a metallic ring is firmly fitted around the outer rim. The atomized water should preferably have a particle size of 5 μm—70 μm. This is because larger particle sizes might cause partial or local excessive cooling. For practical reasons, the amount of atomized water should be in the range of 100 ml/m²s to 300 ml/m²s with the compressed air pressure required for producing the atomized water equal to 2.5 to 3.5 kgf/cm², and the rate of the cool air supply should have a range of 0.3 Nm³/s to 0.6 Nm³/s with its pressure equal to between 500 mm Aq and 1,000 mm Aq. The requirements for the above mentioned parameters, such as the rate of atomized water, compressed air pressure, cool air rate, and its pressure, vary with the factors such as the thickness of sheet glass, heating temperature, etc. Under the usual conditions, the acceptable values for the above parameters are 200 ml/m²s for the atomized water, 3.0 kgf/cm² for the compressed air pressure, 0.5 Nm³/s for the cool air, and 700 mm Aq for its pressure.

The atomized water produced by the compressed air may be blown onto the glass surface at an inclined angle from the lateral side, because this causes no or little deposits of water drops on the surface. According to the present invention, however, it is not essential to do this way since the method allows for the use of nozzles that do not let water drops down at the front or rear and can be placed just above or below the glass surface.

As an alternative solution, a lid forming glass may be placed in an atomized-water filled atmosphere. In this case, it may be necessary to provide means that quickly removes warm gas such as steam that will be produced from the atomized water as a result of its contact with the heated glass, while always keeping both the sides of the glass contacted by a fresh stream of atomized water. This is particularly true for the area neighboring the center hole, which takes time before it is completely cooled as compard with the other areas. In this case, some appropriate means may be provided which allows a stream of atomized water to flow through the center hole (such as means that develops a differential pressure between the atomized waters on the opposite sides of the glass being treated), thus allowing a stream of atomized water on the lower side to flow through the center hole toward the upper side. Alternatively, it may be possible to let more atomized water blown onto the center hole neighboring area (by placing the nozzles closer to that area, for example). In either case, the combined use of exhaust nozzles and injector nozzles provides a uniform rapid cooling of all the areas including the center hole area. In this case, those different nozzles are arranged alternately, and the warm gas produced and staying on the surface can be eliminated by the exhaust nozzles.

Immediately after the sheet glass is formed to the desired lid shape under the applied heating of 700°C to 730°C range, it is moved to the tempering process. As it is anticipated that a drop in the temperature will occur during its travel, the heating temperature is selected to a 700°C to 730°C range. This allows the heated glass to be tempered with the maximum possible drop to more or less than 700°C.

The forming of the sheet glass is done by heating it to 700°C—730°C. This may be performed in several ways. One way is to allow the sheet glass to be formed to a spherically curved surface by its own weight under the applied heating, and then move it to the tempering process. Another consists of a preliminary moderate forming, followed by a final forming that occurs by using a pressure shaping method. In a third way, the forming is performed by increasing the pressure on the concave side and reducing the pressure on the convex side. Of the three ways, the second way provides the highest dimensional precision such as curvature.

The thermal resistance testing under the differential temperature occurs while allowing the tempered glass-based lids to pass through the water showering area at about 20°C. Therefore, the testing occurs for all lids at a temperature difference of 170°C minus 20°C, or 150°C.

As the concept of the present invention has been described above, one feature of the method is to permit a rapid cooling without any local excessive cooling that might cause damages to the glass. Briefly, this is because the method is based on the concept that an initial step is to blow the atomized water produced by compressed air as well as the cool air onto both the sides of the previously treated sheet glass forming the lid for the specified period of time, followed immediately by another step of blowing an additional cool air of the specific temperature. An additional feature is the combined use of the atomized water and cool air, through which the formed sheet glass can be tempered uniformly in the directions of the depth and surface, including the center and outer peripheral areas. The thermal resistance testing under the different temperature condition has two effects, one being to save the time required for allowing the tempered glass-based lids to cool to their ambient temperature and the other being to ensure the high-quality products.

Those and other objects and features of the present invention will become apparent from the detailed description of a typical example that follows by referring to the accompanying drawings, in which:

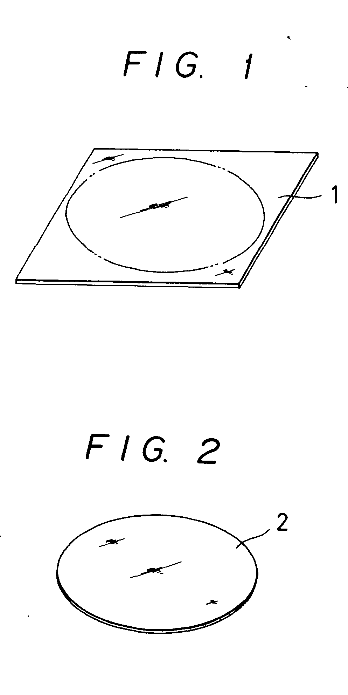

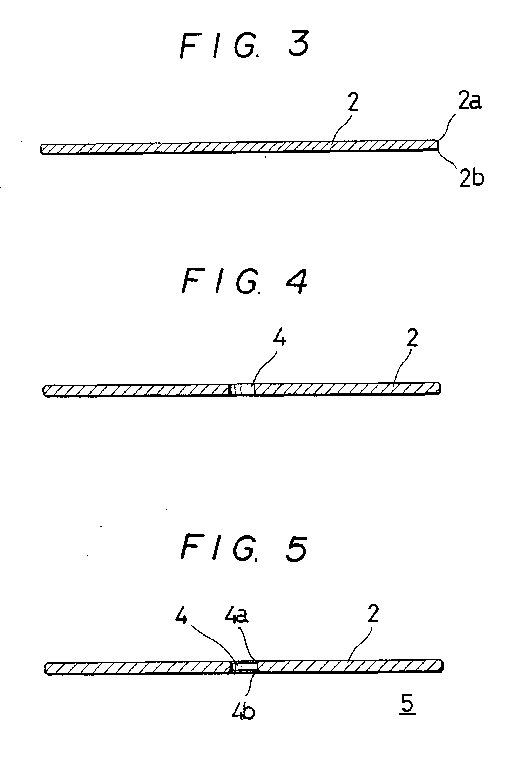

Figs. 1 to 5a illustrates the preliminary step-by-step sequence of forming a cut sheet glass to the ddesired lid shape, in which Fig. 1 is a perspective view of an original sheet glass, Fig. 2 is a perspective view of a round-cut sheet glass, Fig. 3 is a sectional view showing how the chamfering for the round glass sheet takes place, Fig. 3a is a partly enlarged sectional view of Fig. 3, Fig. 4 is a sectional view showing a center hole made through the sheet, Fig. 5 is a sectional view showing how the chamfering for the center hole takes place, and Fig. 5a is a partly enlarged sectional view of Fig. 5;

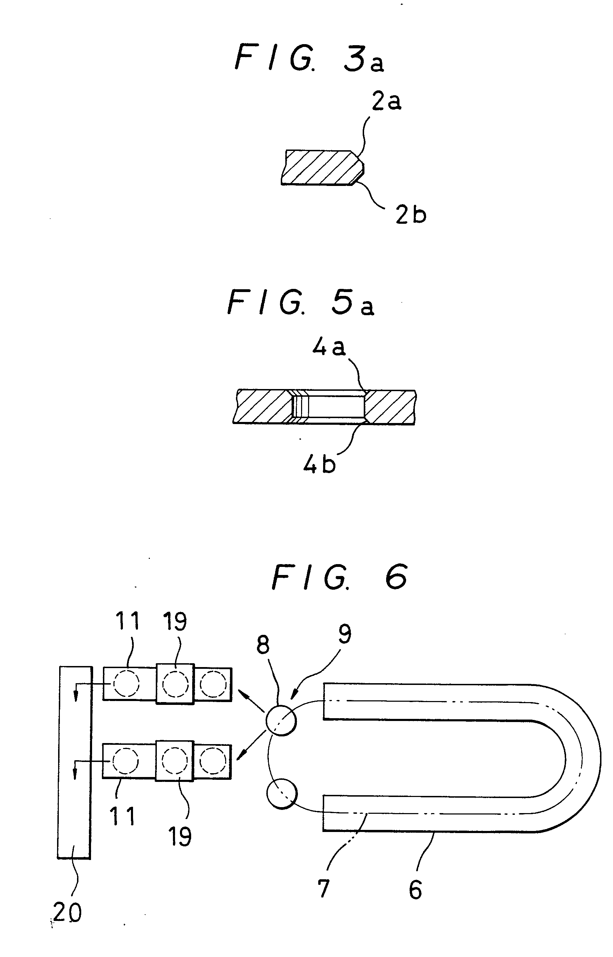

Fig. 6 illustrates the arrangement of the individual processing locations where the previously treated glass sheet is processed in accordance with the corresponding steps of the method of the invention;

Fig. 7 is a sectional view showing how the sheet glass is supported;

Fig. 8 is a sectional view showing how the sheet glass is being formed under applied pressure;

Fig. 9 is a front view illustrating how the formed sheet glass is being tempered;

Fig. 10 is a perspective view of a tempered glass lid that results from the preceding steps; and

Fig. 11 is a partly enlarged sectional view of Fig. 10.

A typical example that best embodies the present invention is now described in detail.

A sheet of glass 1 is cut to a round shape 2 of a specified size forming a lid (Fig. 2). Then, chamfering occurs against the peripheral edge of the rounded glass sheet 2 to provide beveled edges 2a, 2b (Fig. 3, 3a). Next, a center aperture 4 is provided through the depth of the glass sheet, to which a knob 3 is to be fastened (Fig. 4). Similary, chamfering occurs for the upper and lower edges of the opening 4, providing beveled edges 4a, 4b (Fig. 5, 5a). Then, the sheet is cleaned on both sides to provide clean surfaces. This concludes the preliminary step for the glass lid.

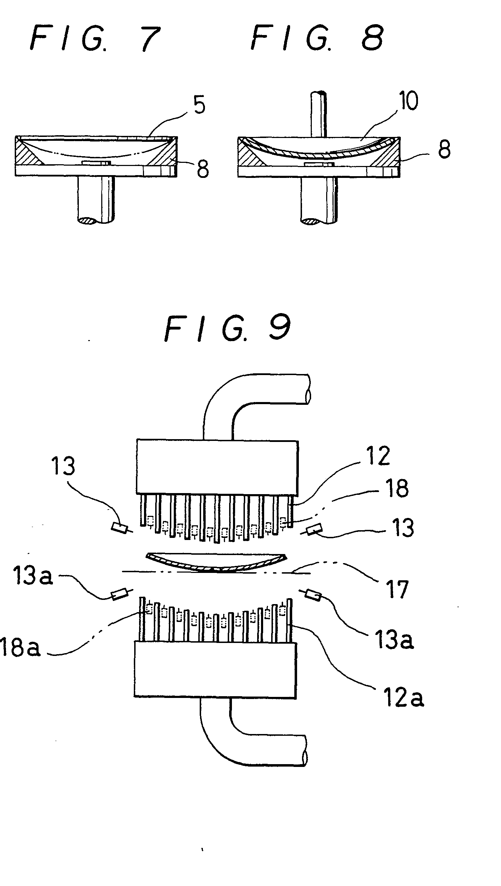

Following the preliminary step, the lid-forming glass 5 is placed on a holder 8, which is located on a conveyer 7 running through a heater tunnel or furnace 6 (Fig. 7). The conveyer 7 runs intermittently through the tunnel 6, where the glass sheet 5 is heated to about 715°C. Under the applied heating, the glass sheet 6 is softened, forming itself to a reversed spherical or concave shape by its own weight ((Fig. 8). The resulting sheet is formed to have a curvature which is slightly higher than that of the design. Then, the formed sheet 5 is reformed by means of a pressure pattern 10 at a press reforming location 9. The pressure pattern 10 is designed to provide the predetermined curvature, and the desired curvature for the lid is obtained according to that of the pattern 10. Immediately after it is reformed, the reformed sheet 5 is placed on a tempering conveyer 11 (which may be made of a metallic net, for example), which carries it through the tempering-processing location 19. The tempering location includes a plurality of nozzles arranged above and below the conveyer, as shown in Fig. 9. The nozzles 12, 12a supply a jet of cool air at about 7°C, and the nozzles 13, 13a supply a jet of atomized water produced by compressed air. The vapor provided by the atomized water envelops the glass sheet 5. For this example, the values for the above parameters have been selected as follows: the cool air supply has a rate of 0.5 N m³/s, the atomized water supply has a rate of 200 ml/s, the compressed air has a pressure of 3 kgf/cm², and the atomized water has an average particle size of 40 μm. The cooling occurs for about 4 seconds by supplying both the atomized water produced by the compressed air and the cool air at about 7°C, and then the supply of the atomized water is stopped, while a fresh jet of cool air at 7°C continues to be supplied from the nozzles 12, 12a. This continues for 8 seconds, allowing the glass to cool. This fresh air is supplied at the rate of 0.5 N m³/s. If the lower nozzles are made to supply cool air whose pressure is higher than that of the cool air supplied by the upper nozzles, it is possible to make the glass on the metallic net 17 floating, although it is slight. The nozzles 18, 18a shown by the dot-dash lines may be provided, as shown in Fig. 9, in place of the nozzles 13, 13a for supplying jets of atomized water, if those nozzles 18, 18a cause no water drops at the front or rear. In this case, the nozzles 18, 18a may be arranged such that each is placed between the adjacent nozzles 12, 12a.

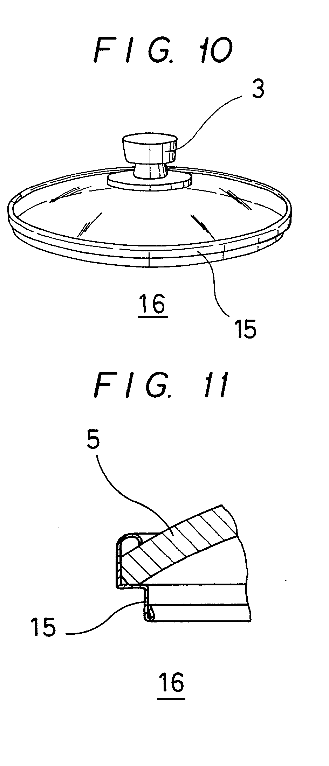

Through the above cooling process, the glass is rapidly cooled from 700°C down to a temperature below its strain point. Thus, the tempering process is completed. Following the tempering process, the tempered glass-based lid is further cooled down to about 170°C, and is then passed through the water showering area 20, where the thermal resistance testing under the differential temperature condition (the temperature of 150°C, which is equal to a difference between the material temperature of 170°C and the water temperature of 20°C) takes place. During this testing, the lid is allowed to cool to the normal temperature. Thus, the time required for this cooling can be saved. Then, after the shock resistance testing, for example, is performed for checking its quality, a knob 3 is fastened to the center hole 4 of the tempered glass lid by appropriate means such as screw, and a metallic ring 15 is firmly fitted around its outer rim. This completes the lid 16 as shown in Figs. 10 and 11.

It has been described that much steam is produced when the cooling is made by the atomized water, which prevents the uniform tempering. In order to avoid this situation, exhaust nozzles may be disposed in the area neighboring the center hole, around which more of the produced steam tends to stay longer. Thus, all sides of the glass can be tempered uniformly.

As readily understood from the preceding description, the method according to the present invention offers the advantages since it avoids any local excess cooling and allows for the tempering to the required depth. This can be achieved by the rapid uniform cooling by supplying the jets of atomized water produced by the compressed air as well as the jets of cool air, followed immediately by the cooling by the fresh jets of cool air. Therefore, no defective products due to the poor tempering will occur with the result that a higher productivity and yield can be achieved. Furthermore, insufficiently tempered areas (such as the center hole and outer rim areas) which are observed in the prior art air tempering method can be eliminated, and any damages that may occur during the treatment can be avoided. This eliminates the need of providing a buffering space between the metallic ring and the lid outer rim when the former is fitted around the latter.

The additional advantage of the present inven-

tion is that the total cooling time can be reduced by a factor of 8 to 10 seconds, as compared with the prior method employing the single air cooling technique. Thus, the productivity can be enhanced by 40%.

As an additional advantage, the thermal resistance testing under the differential temperature condition occurs for all tempered glass-based lids, and this testing saves the time required for allowing the lids to cool to the ambient temperature and provides the high-quality products.

Although the present invention has fully been described by showing the typical example thereof, it should be understood that various changes and modifications may be made without departing from the scope of the appended claims.

## Claims

1. A method of manufacturing a tempered glass lid including cutting an original sheet of glass to any desired lid shape,

heating the lid-forming sheet glass to a temperature that allows the glass to soften;

forming the central portion of the sheet glass to present a concave shape of a specified size; characterised by:

supporting the formed sheet glass in its horizontal position;

blowing a jet of atomized water produced by compressed air as well as a primary jet of cool air onto both sides of the formed sheet glass, thereby allowing it rapidly to cool by a short time of seconds, followed by only blowing a secondary jet of cool air for additional seconds to provide a tempered glass-based lid; and

subjecting the tempered glass-based lid to thermal resistance testing under differential temperature conditions.

2. A method as claimed in claim 1, wherein the atomized water produced by the compressed air has a particle size in the range of 5 to 70 μm.

3. A method as claimed in claim 1 or 2, wherein the cooling by the atomized water lasts for a duration of 3 to 5 seconds.

4. A method as claimed in any preceding claim, wherein the primary jet of cool air has a temperature in the range of 5 to 10°C, and the secondary jet of cool air is supplied for 5 to 10 seconds.

5. A method as claimed in any preceding claim, wherein the forming of the central portion of the sheet glass is done by one or more of the following techniques: self-weight forming, self-weight forming followed by press forming, and development of differential pressure between the concave and convex sides.

6. A method as claimed in any preceding claim, wherein the cooling by the atomized water takes place with the formed glass lid supported within an atmosphere containing atomized water, and the vapor produced within the atmosphere is forced out.

7. A method as claimed in any preceding claim, wherein the formed glass lid is placed on a metallic net.

8. A method as claimed in any preceding claim, wherein the supply of the atomized water takes place at a rate in the range of 100 to 300 ml/s.

9. A method as claimed in any preceding claim, wherein the supply of the cool air takes place at a rate in the range of 0.3 to 0.6 N m³/s under a pressure in the range of 500 to 1,000 mm Aq.

10. A method as claimed in any preceding claim, wherein the thermal resistance testing under differential temperature conditions takes place by allowing the tempered glass-based lid to pass through a water showering area.

11. A method as claimed in any preceding claim, including fastening a knob to a center hole of the temper-treated sheet glass led and firmly fitting a metallic ring around its outer rim.

## Patentansprüche

1. Verfahren zum Herstellen eines getemperten Glasdeckels, welches einschließt:

Schneiden einer ursprünglichen Glastafel zu irgendeiner gewünschten Deckelform;

Erhitzen des den Deckel bildenden Tafelglases auf eine Temperatur, welche das Glas erreichen läßt; und

Formen des zentralen Abschnittes des Tafelglases, so, daß dieser eine konkave Gestalt von spezifizierte Größe bildet, gekennzeichnet durch

Unterstützen des geformten Tafelglases in dessen horizontaler Stellung;

Blasen eine Strahles atomisierten Wassers, der durch Druckluft wie auch durch einen primären Kaltluftstrahl erzeugt wird, auf beide Seiten des geformten Tafelglases, um dieses dadurch innerhalb einer kurzen Zeit von Sekunden rasch abkühlen zu lassen, worauf man einen sekundären Kaltluftstrahl für zusätzliche Sekunden aufbläst, um einen temperten, eine Glasbasis bildenden Deckel zu erhalten, und Unterwerfen des Getemperten, die Glasbasis bildenden Deckel unter einen thermischen Widerstandest unter unterschiedlichen Temperaturbedingungen.

2. Verfahren nach Anspruch 1, bei dem das atomisierte Wasser, das durch Druckluft erzeugt wird, eine Teilchengröße im Bereich von 5 bis 70 μm aufweist.

3. Verfahren nach Anspruch 1 oder 2, bei dem die Abkühlung durch atomisiertes Wasser über eine Zeit zwischen 3 bis 5 Sekunden andauert.

4. Verfahren nach irgendeinem der voranstehenden Ansprüche, bei dem der primäre Strahl der Kaltluft eine Temperatur im Bereich von 5° bis 10°C aufweist und der sekundäre Strahl von Kaltluft für die Dauer von 5 bis 10 Sek. zugeführt wird.

5. Verfahren nach irgendeinem der vorangehenden Ansprüche, bei dem der zentrale Abschnitt des Tafelglases durch eine oder mehrere der folgenden Techniken gebildet wird: Eigengewichts-Formung; Eigengewichts-Formung, der eine Druckformung folgt; und Entwicklung eines Differentialdruckes zwischen der konkaven und der konvexen Seite.

6. Verfahren nach irgendeinem der voranstehenden Ansprüche, bei dem das Abkühlen durch atomisiertes Wasser erfolgt, indem der geformte Glasdeckel in einer Atmosphäre unterstützt wird, die atomisiertes Wasser enthält, und indem der in der Atmosphäre erzeugte Dampf zwangsweise herausgeführt wird.

7. Verfahren nach irgendeinem der voranstehenden Ansprüche, bei dem der geformte Glasdeckel auf einem Metallnetz plaziert wird.

8. Verfahren nach irgendeinem der voranstehenden Ansprüche, bei dem die Zufuhr des atomisierten Wassers mit einer Geschwindkigkeit im Bereich von 100 bis 300 ml/s erfolgt.

9. Verfahren nach irgendeinem der voranstehenden Ansprüche, bei dem die Zufuhr der Kaltluft mit einer Geschwindigkeit im Bereich von 0,3 bis 0,6 N m³/s und unter einem Druck im Bereich von 500 bis 1000 mm Wasser erfolgt.

10. Verfahren nach irgendeinem der voranstehenden Ansprüche, bei dem der thermische Widerstandstest unter unterschiedlichen Temperaturbedingungen dadurch erfolgt, daß man den getemperten, die Glasbasis bildenen Deckel durch einen Wasserschauer-Bereich wandern läßt.

11. Verfahren nach irgendeinem der voranstehenden Ansprüche, welches das Befestigen eines Knofes in einem zentralen Lock des durch Temperung behandelten Tafelglasdeckels und durch das feste Anbringen eines Metallringes um dessen äußeren Rand umfaßt.

**Revendications**

1. Procédé de fabrication d'un couvercle en verre trempé comprenant la découpe d'une plaque de verre initiale en une forme de couvercle souhaitée;

le chauffage de la plaque de verre de formation du couvercle à une température qui permet au verre de ramollir;

le façonnage de la portion centrale de la plaque de verre pour obtenir une forme concave d'une taille spécifique; caractérisé par:

le support de la plaque de verre façonnée dans sa position horizontale;

la projection d'un jet d'eau atomisée produit par de l'air comprimé ainsi que d'un premier jet d'air frais sur les deux faces de la plaque de verre façonnée, pour permettre à celle-ci de refroidir rapidement pendent quelques secondes, suivie de la projection seule d'une second jet d'air frais pendant quelques secondes supplémentaires pour fournir un couvercle en verre trempé; et

la soumission du couvercle en verre trempé à un essai de résistance thermique à des conditions de températures différentielles.

2. Procédé selon la revendication 1, dans lequel l'eau atomisée produite par l'air comprimé présente une taille de particule dans la plage de 5 à 70 µm.

3. Procédé selon la revendication 1 ou 2, dans lequel le refroidissement par l'eau atomisée dure pendant 3 à 5 secondes.

4. Procédé selon l'une quelconque des revendications précédentes, dans lequel le premier jet d'air frais est d'une température dans la plage de 5 à 10°C, et le second jet d'air frais est fourni pendant 5 à 10 secondes.

5. Procédé selon l'une quelconque des revendications précédentes, dans lequel le façonnage de la portion centrale de la plaque de verre est réalisé par une ou plusieurs des techniques suivantes: façonnage par son propre poids, façonnage par son propre poids suivi d'un façonnage par pression, et formation d'une pression différentielle entre les faces concave et convexe.

6. Procédé selon l'une quelconque des revendications précédentes, dans lequel le refroidissement par l'eau atomisée a lieu avec le couvercle en verre façonné supporté dans une atmosphère renfermant de l'eau atomisée, et la vapeur produite dans l'atmosphère est expulsée par force.

7. Procédé selon l'une quelconque des revendications précédentes, dans lequel le couvercle en verre façonné est placé sur un filet métallique.

8. Procédé selon l'une quelconque des revendications précédentes, dans lequel la fourniture de l'eau atomisée a lieu à un taux dans la plage de 100 à 300 ml/s.

9. Procédé selon l'une quelconque des revendications précédentes, dans lequel la fourniture de l'air frais a lieu à un taux dans la plage de 0,3 à 0,6 Nm³/s sous une pression dans la plage de 500 à 1000 mm Aq.

10. Procédé selon l'une quelconque des revendications précédentes, dans lequel l'essai de résistance thermique à des conditions de températures différentielles a lieu en permettant au couvercle en verre trempé de passer par une zone d'arrosage d'eau.

11. Procédé selon l'une quelconque des revendications précédentes, comprenant la fixation d'un bouton dans un trou central du couvercle en plaque de verre trempée et l'ajustage serré d'un anneau métallique autour de son bord extérieur.

# F I G.  1

# F I G. 2

# F I G. 3

2    2a

2b

# F I G. 4

4    2

# F I G. 5

4   4a    2

4b    5

## F I G. 3a

2a

2b

## F I G. 5a

4a

4b

## F I G. 6

11  19

8  9

11

19

20

7  6

# FIG. 7

# FIG. 8

# FIG. 9

## F I G. 10

3

16

15

## F I G. 11

5

15

16